# EUROPEAN PATENT SPECIFICATION

(11) **EP 1 851 496 B1**
(45) Date of publication and mention of the grant of the patent: **11.11.2015**
(21) Application number: 06708429.3
(22) Date of filing: 21.02.2006
(51) Int. Cl.: F27B 3/18, F27D 13/00, F27D 3/00, C21C 5/56, F27D 3/06

(54) **CONVEYOR APPARATUS FOR CONVEYING A METAL CHARGE IN A MELTING PLANT**
FÖRDERVORRICHTUNG ZUR BEFÖRDERUNG EINER METALLLADUNG IN EINER SCHMELZANLAGE
APPAREIL DE TRANSPORT PERMETTANT DE TRANSPORTER UNE CHARGE METALLIQUE DANS UNE INSTALLATION DE FUSION

(30) Priority: 22.02.2005 IT UD20050022
(43) Date of publication of application: 07.11.2007
(73) Proprietor: Danieli & C. Officine Meccaniche SpA, 33042 Buttrio (Udine) (IT)
(72) Inventor: ANSOLDI, Marco, I-33010 Tavagnacco (IT); DE LUCA, Andrea, I-33047 Remanzacco (IT); POLONI, Alfredo, I-34070 Fogliano Di Redipuglia (IT); SELLAN, Romano, I-34124 Trieste (IT); TERLICHER, Stefano, I-33043 Cividale Del Friuli (IT)
(74) Representative: Petraz, Gilberto Luigi
(86) International application number: PCT/EP2006/060153
(87) International publication number: WO 2006/089897

(56) References cited:
- US-A- 4 083 675

## Description

### FIELD OF THE INVENTION

The present invention concerns an apparatus for conveying a metal charge, such as for example scrap iron, hot or cold sponge iron (DRI), cold pig iron, or other, even in great quantities, for example of the order of about 3 tonnes a minute for scrap iron and up to 6 tonnes a minute for other types of charge, to a container, which can be a melting furnace, for example of the electric arc type, or a scrap-bearing bucket. The apparatus consists of one or more modules, each comprising an oblong bearing structure, substantially horizontal and several tens of meters long, on which a vibration device is mounted able to impart to the bearing structure a vibratory motion in a longitudinal direction, which allows the metal charge to advance in a substantially constant manner and at controlled speed towards the container. According to a variant, at least a part of the bearing structure of at least one module cooperates with a series of hoods so as to create a tunnel, in which the fumes that exit from the melting furnace flow in an opposite direction with respect to the direction of advance of the metal charge, in order to preheat it. In a particular application, the fumes exit from the melting furnace through the same lateral aperture through which the metal charge is introduced.

### BACKGROUND OF THE INVENTION

The patent documents GB-A-828,219, JP-A-55089118, JP-A-55140409, US-A-2,876,891, US-A-2,951,581, US-A-3,604,555, US-A-3,813,209, US-A-3,834,523, US-A-3,882,996, US-A-4,083,675, US-A-4,162,778, US-A-4,285,670, US-A-4,299,566 disclose different types of conveyor apparatus, of a vibratory or oscillating type, for conveying a metal charge to a container of a melting plant; the container can be a melting furnace or a scrap-bearing bucket, which in turn then discharges the metal charge into the melting furnace. When such apparatuses have to be installed in melting plants having a big productive capacity, that is to say, more than 100 tonnes per hour, they are several tens of meters long, so as to be able to offer, on the one hand, an adequate loading plane, and on the other hand a long enough segment to be able to pre-heat the metal charge while it is being conveyed. Each apparatus must then be sized so as to support a metal charge of the weight of several tens of tonnes.

To support such high loads, more recent known apparatuses each comprise a rather heavy bearing structure, even more then one hundred tonnes. Such structures are either of the monolithic type, or of the lattice type and made with solid metal elements welded together. A shaped metal sheet is fixed to the bearing structure so as to define a conveyor channel, having a substantially U-shaped cross section, with the lateral walls normally diverging upwards.

A vibration device is also mounted on the bearing structure, usually consisting of one or more pairs of eccentric masses, which rotate in synchrony with each other, so as to generate a vibratory motion which is transmitted to the bearing structure and to the relative conveyor channel, mainly along the longitudinal axis of the latter and, residually and less importantly, in the transverse direction too.

The bearing structure, the conveyor channel and the vibration device thus form a structural whole or group which is supported, by means of vertical tie rods, by a series of fixed columns, disposed at intervals at the sides of the group. The longitudinal accelerations imparted to the structural whole by the vibration device cause a relative movement of the metal charge with respect to the conveyor channel.

In particular, it is known a vibratory conveyor for conveying scrap metal, wherein a weighing devices is provided for measuring the weight of the conveyed scrap metal, on the basis of the absorption of radiation by the metal, in relation to its density.

Moreover, it is also known a heat processing furnace provided with a bifurcated feeder which allows scrap steel to be introduced into the furnace from an associated preheater. Direct reduced iron, slag formers, carburizers, and other alloys are able to be introduced through a lower channel in the connecting car pan into the furnace.

All known apparatuses have the disadvantage, however, that they have a very rigid and heavy bearing structure, so that the forces needed to induce an adequate vibration to the structural whole, with the relative accelerations, must be very high. Consequently, both the overall cost of the conveyor apparatus, and the energy needed to keep it functioning, are very high, and to this must be added important factors in providing the supporting plane and the foundations.

Moreover, due to the enormous masses present and the high vibratory forces generated by the vibration device, the structural whole has low reliability and is subject to frequent breakages and break-downs, which require consequent interruptions for maintenance of the conveyor apparatus, with serious repercussions on the production process and the melting plant in its entirety.

The structures of known apparatuses are therefore very heavy, and so the vibration devices or exciters associated with them must be very powerful and therefore very expensive.

This is especially true when it is intended to obtain a substantially continuous feed of the melting furnace or loading the scrap-bearing buckets, in order to obtain a high performance over time.

Purpose of the present invention is to achieve an apparatus for conveying a metal charge towards a container of a melting plant, which is as light as possible, yet respects the technical parameters and safety norms, so as to be highly reliable, inexpensive, which requires limited energy consumption to make it function, and little maintenance.

The Applicant has devised, tested and embodied the present invention to overcome the shortcomings of the state of the art and to obtain this and other purposes and advantages.

### SUMMARY OF THE INVENTION

The present invention is set forth and characterized in the main claim, while the dependent claims describe other characteristics of the invention or variants to the main inventive idea.

In accordance with the above purpose, a conveyor apparatus according to the present invention for conveying a metal charge to a container, for example a melting furnace or a scrap-bearing bucket of a melting plant, comprises a substantially oblong bearing structure, on which a conveyor channel is fixed and on which a vibration device is mounted able to impart a vibratory motion, at least in a longitudinal direction, to the bearing structure and to the associated conveyor channel, in order to feed the metal charge with respect to the conveyor channel in a substantially constant manner to the container.

According to a characteristic of the present invention, the bearing structure comprises a plurality of metal tubular elements, light but with a high resistance modulus, fixed one to the other so as to form at least part of a reticular lattice, highly rigid and resistant to dynamic stresses.

According to a variant, the metal structure consists of two lateral flanks connected to each other by connection means. In this preferential embodiment, the lateral flanks and/or the connection means are made using the tubular elements.

According to a preferential form of embodiment, a conveyor apparatus according to the present invention advantageously comprises two or more conveyor modules, substantially identical in conception and advantageously aligned one after the other, in any case cooperating one in sequence with the other. At least one of the conveyor modules functions as an element for loading the metal charge, while at least another normally functions as a preheating element for said metal charge.

The inventive concept as above is advantageously applied to each of the conveyor modules. The present invention also provides that the conveyor apparatus comprises only a single module, divided into a loading zone for example for scrap iron, disposed farther upstream with respect to the container to be fed, and a possible preheating zone for the scrap, nearer the container to be fed.

The bearing structure, most of the components of which are made with metal tubular elements, allows to have conveyor modules each almost 50 m long and about 3 m wide, which weigh less than 100 tonnes and in which 30 and more tonnes of scrap can be disposed and conveyed simultaneously, using relatively simple vibration devices which absorb a limited power for functioning, for example of the order of 40 KW.

The bearing structure according to the present invention also has a high ratio between its rigidity and its mass, which ratio has a positive influences, and to a surprising extent, on the level of reliability of the whole conveyor apparatus.

The metal tubular elements that make up the bearing structure of each conveyor module are fixed to each other by means of welding or other suitable fixing means, such as bolts, rivets, riveted joints or other, in order to form a very rigid but light reticular structure.

Each metal tubular element advantageously consists of a steel section bar, advantageously having an inner cavity with a rectangular cross section although, as a variant, the cross section can also be circular, ellipsoidal or other similar shape.

The bearing structure of each conveyor module is free to oscillate, remaining horizontal, supported by a plurality of vertical tie rods, stretching between horizontal fixed supporting beams and cross beams of the bearing structure itself, which protrude laterally from both sides with respect to the main body of the bearing structure.

According to a variant, the bearing structure can be suspended on elastic blades suitable to support, and at the same time to allow, the oscillation provided.

On the upper part of each bearing structure a conveyor channel is fixed, made with a plurality of metal sheets welded together in such a manner that there are no welding beads, at least on its inner surfaces, that is, those in contact with the scrap to be conveyed.

According to a variant, said conveyor channel, in whole or in part, can have associated means for the circulation of a cooling fluid.

It comes within the scope of the present invention to provide a control device able to detect the displacement, or oscillations, of the bearing structure with respect to the fixed uprights, in order to stop the vibration device when the oscillations of the structure reach a predefined value, in order to prevent break-downs or malfunctions.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a lateral view of a conveyor apparatus according to the present invention, inserted in a melting plant;
- fig. 2 is an enlarged detail of fig. 1, which shows the loading module of the conveyor apparatus;
- fig. 3 is a plane view of the detail in fig. 2;
- fig. 4 is a perspective and schematized view of the bearing structure of the module in fig. 2;
- fig. 5 is a lateral and partial view of the bearing structure in fig. 4, with the associated conveyor channel;
- fig. 6 is a section from VI to VI of fig. 5;
- fig. 7 is a perspective and schematized view, on an enlarged scale, of the two groups that make up the vibration device of the module in fig. 2;
- fig. 8 is a plane view of a detail of one of the groups in fig. 7;
- fig. 9 is a schematic view of a control device associated with the apparatus in fig. 1.

### DETAILED DESCRIPTION OF A PREFERENTIAL FORM OF EMBODIMENT

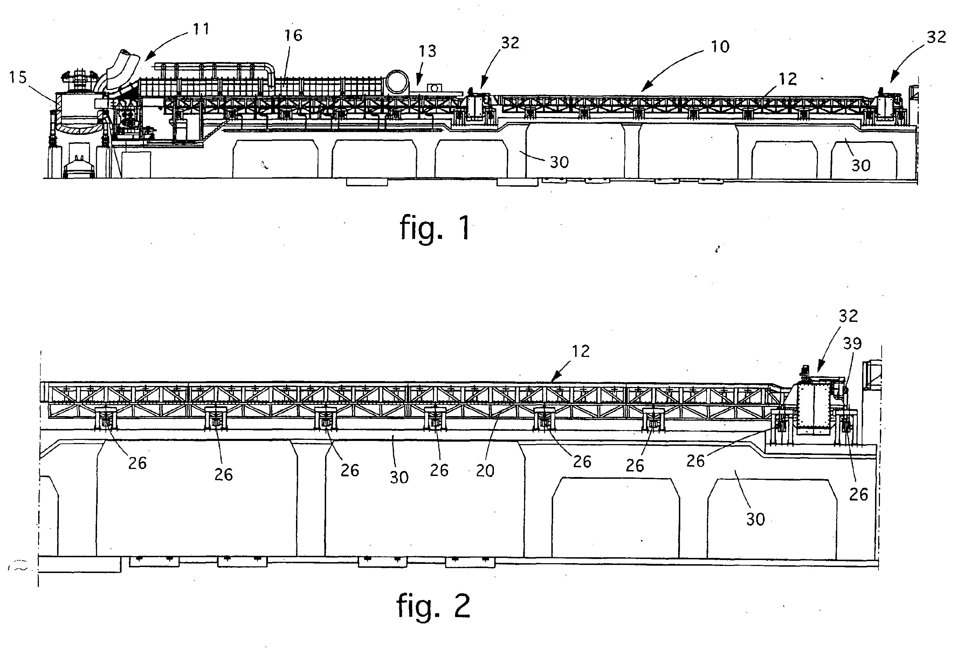

With reference to fig. 1, a conveyor apparatus 10 according to the present invention is shown inserted in a melting plant 11, of a known type, for example of the type described in the Italian application for a patent of industrial invention UD2003A000231 which Applicant filed on 27.11.2003.

The conveyor apparatus 10 comprises a first loading module 12, about 44 m long, into which a determinate quantity of scrap iron is able to be loaded, from above, of the order of about 30 tonnes or more. Downstream of the loading module 12, and coaxial therewith, a second preheating module 13 is disposed, also about 44 m long or more, in which the scrap is able to be preheated before being introduced into a melting furnace 15, for example of the electric arc type, also of a known type. The preheating module 13 is inserted for a good part of its length, that is, for about 30 m or more, in a preheating tunnel, into which the fumes exiting from the melting furnace 15 are able to be conveyed.

The loading module 12 and the preheating module 13 are substantially identical and, for simplicity of description, only one is described here, that is, the loading module 12. The present invention also provides that the apparatus 10 comprises only a single module, divided into a scrap loading zone, disposed farther upstream with respect to the melting furnace 15, and a possible preheating zone for the scrap, nearer the melting furnace 15.

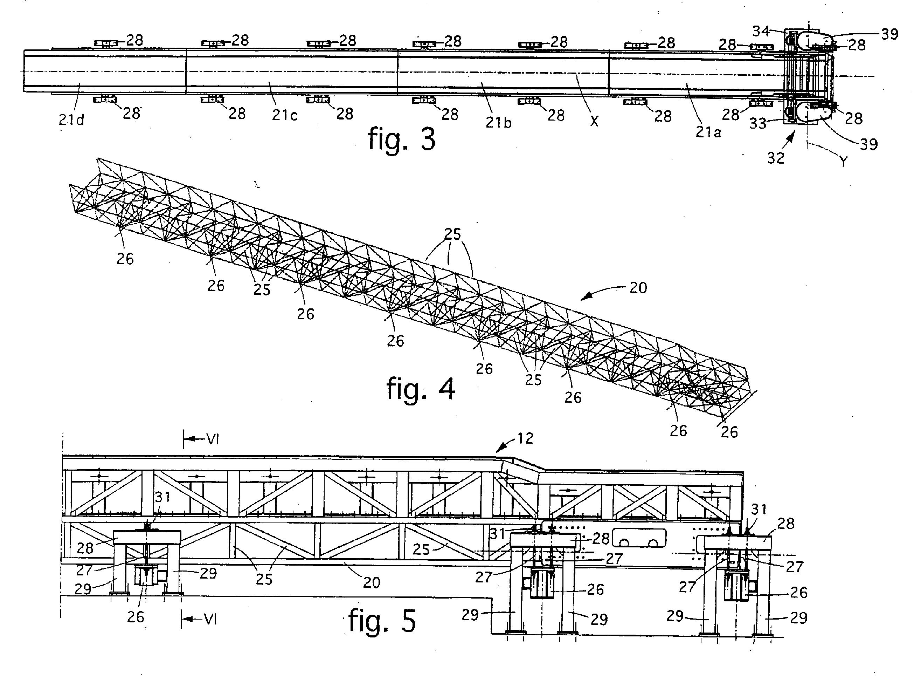

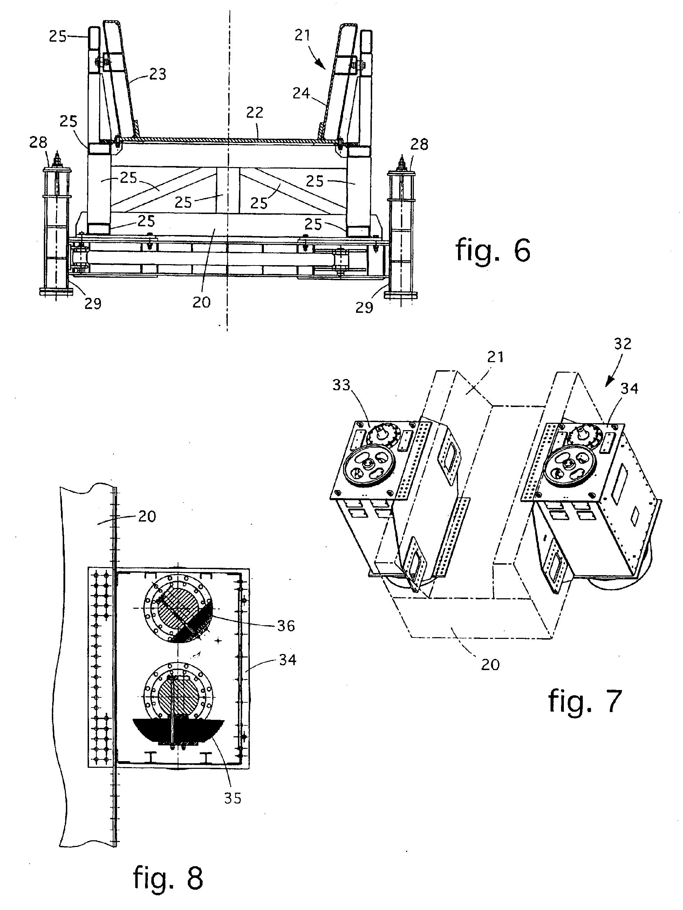

Each module 12, 13 (figs. 2, 3, 4 and 5) comprises an oblong bearing structure 20, substantially horizontal, on the upper part of which a conveyor channel 21 is fixed (fig. 6), made with metal sheets 21a, 21b, 21c and 21d (fig. 3) welded together in such a manner that there are no welding beads at least on its inner surfaces.

The conveyor channel 21 has a substantially horizontal bottom wall 22 (fig. 6), and two lateral walls 23 and 24 widening upwards by about 18°, which define a substantially U-shaped cross section. The inner surfaces of the walls 22, 23 and 24, particularly those of the wall 22, are very smooth and regular, so that the friction coefficient between them and the scrap is very low, for example 0.3.

The bearing structure 20 (figs. 4, 5 and 6) advantageously comprises a plurality of metal tubular elements 25, fixed to each other by means of welding or other suitable fixing means such as bolts, rivets, riveted joints or other, so as to form a reticular lattice structure about 43 m long, that is, almost as long as each module 12, 13, about 3m or more wide and overall about 2.5 m or more high.

Each metal tubular element 25 advantageously consists of a steel section bar, having an inner cavity with a rectangular cross section, although the cross section can also be circular, ellipsoidal or other similar shape.

In the lower part of the bearing structure 20 a plurality of cross beams 26, in this case eight, are fixed, for example by means of bolts, at regular intervals to each other, which extend from both the lateral flanks of the bearing structure 20. Each cross beam 26 is supported by one or more pairs of tie rods 27, each of which is pivoted to a supporting beam 28, supported by two vertical pillars 29 fixed to a base 30 of the plant 11.

Each tie rod 27 is pivoted to the corresponding supporting beam 28 by means of an articulated joint 31, for example of the spherical type, or in any case with a double degree of freedom, which allows it to follow the oscillations of the bearing structure 20 both in a longitudinal direction (X axis) and also in a transverse direction (Y axis).

A vibration device 32 is mounted at one of the two ends of the bearing structure 20 and is able to impart to the latter and to the conveyor channel 21 a vibratory or oscillatory motion, at determinate frequencies and accelerations, such as to make the mass of scrap (about 30 tonnes) advance longitudinally and in a substantially continuous manner, at a speed of about 100 mm/s, so as to convey to the melting furnace 15 about 3 tonnes per minute of scrap preheated in the tunnel 16.

The vibration device 32 essentially comprises two groups 33 and 34 (figs. 3 and 7), identical to each other and disposed on opposite sides of the bearing structure 20. Each group 33 and 34 in turn comprises a pair of eccentric masses 35 and 36 (fig. 8) able to rotate in reciprocally opposite directions and in synchrony with each other. Each pair of eccentric masses 35 and 36 is made to rotate by an electric motor 39 (figs. 2 and 3) of a known type.

For the purposes of the present invention, the vibration device 32 can be of any known type, although advantageously it is of the type described in an application for a patent of industrial invention filed by Applicant at the same time as the present patent application. Therefore, for brevity of exposition, the vibration device 32 is not described in detail here.

The whole, consisting of the bearing structure 20, the conveyor channel 21 and the vibration device 32, has an overall weight limited to about 98.5 tonnes which, given the same sizes, is much less than that of conveyor apparatuses known in the state of the prior art.

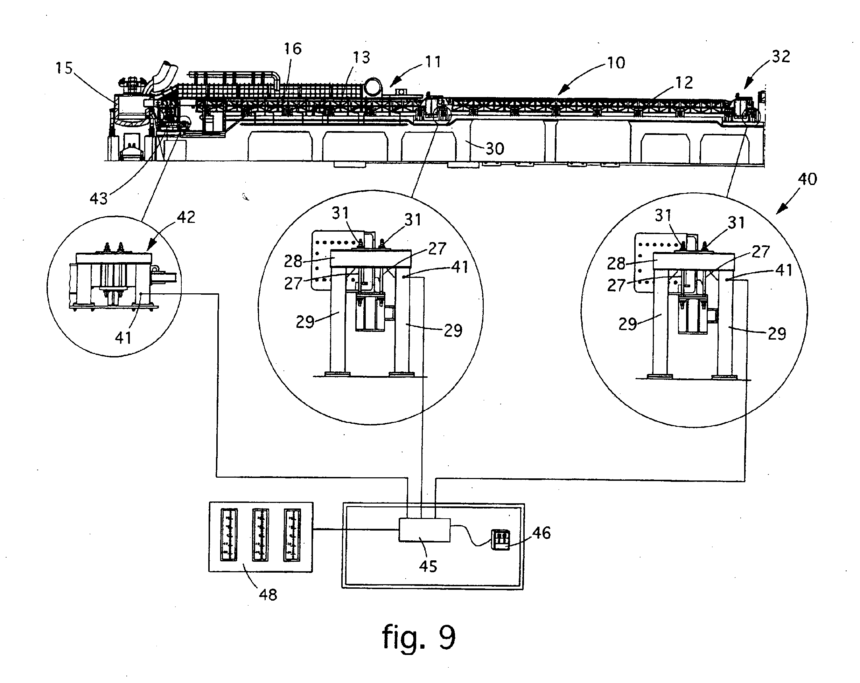

The conveyor apparatus 10 also comprises a control device 40 (fig. 9), able to detect the displacements or oscillations of the bearing structure 20 with respect to the fixed vertical pillars 29 and to interrupt the electric feed to the motors 39 if said oscillations reach a predetermined value.

To be more exact, the control device 40 comprises at least a sensor 41 disposed on the vertical pillar 29 of each module 12, 13 farthest from the furnace 15. A sensor 41 is possibly also disposed on a vibration device 42 associated with a connecting car 43 interposed, in a known manner, between the module 13 and the furnace 15.

The sensors 41 are connected to an electronic processor 45, connected to a key board 46 for setting the data, and to a display 48, possibly positioned on the command panel of the plant 11.

It is clear that modifications and/or additions of parts may be made to the conveyor apparatus 10 as described heretofore, without departing from the scope of the present invention.

It is also clear that, although the present invention has been described with reference to a specific example, a person of skill in the art shall certainly be able to achieve many other equivalent forms of conveyor apparatus for conveying scrap iron to a melting plant, having the characteristics as set forth in the following claims and hence all coming within the field of protection defined thereby.

## Claims

1. Conveyor apparatus for conveying a metal charge towards a container (15) of a melting plant (11), comprising at least a substantially oblong bearing structure (20), on which a conveyor channel (21) is fixed and on which a vibration device (32) is mounted able to impart to said bearing structure (20) and to the associated conveyor channel (21) a vibratory motion at least in a longitudinal direction (X), in order to feed said metal charge with respect to said conveyor channel (21), in a substantially constant manner, towards said container (15), **characterized in that** said bearing structure (20) comprises a plurality of metal tubular elements (25) fixed one to the other so as to form at least part of a reticular lattice.

2. Conveyor apparatus as in claim 1, wherein said bearing structure (20) consists of two lateral flanks and a plurality of connection means interposed between said lateral flanks, **characterized in that** at least said lateral flanks are made using said metal tubular elements (25).

3. Conveyor apparatus as in claim 2, **characterized in that** said connection means are made using said metal tubular elements (25).

4. Conveyor apparatus as in claim 1, **characterized in that** said metal tubular elements (25) are fixed to each other by means of welding or other fixing means, which make the reticular lattice very rigid.

5. Conveyor apparatus as in any claim hereinbefore, **characterized in that** said metal tubular elements comprise steel section bars.

6. Conveyor apparatus as in claim 5, **characterized in that** said steel section bars have an inner cavity with a substantially rectangular cross section.

7. Conveyor apparatus as in any claim hereinbefore, **characterized in that** said bearing structure (20), said conveyor channel (21) and said vibration device (32) define at least a conveyor module (12, 13).

8. Conveyor apparatus as in claim 7, **characterized in that** a conveyor module is divided into at least a zone for loading the metal charge, disposed farther from said container (15), and a possible zone for preheating said metal charge, disposed nearer said container (15).

9. Conveyor apparatus as in claim 7, **characterized in that** two or more conveyor modules (12 and 13), substantially identical to each other in conception, cooperate in sequence.

10. Conveyor apparatus as in claim 9, **characterized in that** at least a first of said modules (12) is able to function as a loading element for said metal charge, while at least a second of said modules (13) is able to function as a preheating element for said metal charge.

11. Conveyor apparatus as in any claim from 7 to 10, **characterized in that** each of said conveyor modules (12, 13) is up to 50 m long, from about 2.5 m to 3.5 m wide, advantageously 3 m, weighs less than 100 tonnes and is able to convey simultaneously 30 and more tonnes of said metal charge.

12. Conveyor apparatus as in any claim hereinbefore, **characterized in that** said bearing structure (20) is free to oscillate, remaining horizontal, supported by a plurality of vertical tie rods (27), stretching between a plurality of horizontal fixed supporting beams (28) and cross beams (26) of the bearing structure (20) itself, which protrude laterally from both sides with respect to the main body of the bearing structure (20).

13. Conveyor apparatus as in any claim from 1 to 12, **characterized in that** said bearing structure (20) is free to oscillate, remaining horizontal, suspended on elastic blades suitable to support said bearing structure (20) from below.

14. Conveyor apparatus as in any claim hereinbefore, **characterized in that** said conveyor channel (21) is made with a plurality of metal sheets (21a, 21b, 21c, 21d) welded together in such a manner that there are no welding beads at least on its inner surfaces, that is, those in contact with said metal charge to be conveyed.

15. Conveyor apparatus as in claim 14, **characterized in that** at least part of said sheets (21a, 21b, 21c, 21d) are associated with cooling means.

16. Conveyor apparatus as in any claim hereinbefore, **characterized in that** it also comprises a control device (40) able to detect the displacements or oscillations of said bearing structure (20) with respect to any fixed part, in order to stop said vibration device (32) when the oscillations of said bearing structure (20) reach a predefined value.

## Patentansprüche

1. Fördervorrichtung zum Befördern einer Metallladung in Richtung eines Behälters (15) einer Schmelzanlage (11), die wenigstens eine im Wesentlichen längliche Lagerstruktur (20) aufweist, auf der ein Förderkanal (21) fixiert ist und auf dem eine Schwingungsvorrichtung (32) montiert ist, die fähig ist, der Lagerstruktur (20) und dem zugehörigen Förderkanal (21) wenigstens in einer Längsrichtung (X) eine Schwingungsbewegung zu verleihen, um die Metallladung in Bezug auf den Förderkanal in einer im Wesentlichen konstanten Weise (21) in Richtung des Behälters zu speisen, **dadurch gekennzeichnet, dass** die Lagerstruktur (20) mehrere rohrförmige Metallelemente (25) aufweist, die aneinander fixiert sind, um wenigstens einen Teil eines netzförmigen Gitters zu bilden.

2. Fördervorrichtung nach Anspruch 1, wobei die Lagerstruktur (20) aus zwei seitlichen Flanken und mehreren zwischen den seitlichen Flanken eingefügten Verbindungseinrichtungen zusammengesetzt ist, **dadurch gekennzeichnet, dass** wenigstens die seitlichen Flanken unter Verwendung der rohrförmigen Metallelemente (25) hergestellt sind.

3. Fördervorrichtung nach Anspruch 2, **dadurch gekennzeichnet, dass** die Verbindungseinrichtungen unter Verwendung der rohrförmigen Metallelemente (25) hergestellt sind.

4. Fördervorrichtung nach Anspruch 1, **dadurch gekennzeichnet, dass** die rohrförmigen Metallelemente (25) mittels Schweißen oder anderer Fixiermittel aneinander fixiert sind, was das netzförmige Gitter sehr starr macht.

5. Fördervorrichtung nach einem der vorhergehenden Ansprüche, **dadurch gekennzeichnet, dass** die rohrförmigen Metallelemente (25) Stahlprofilstangen aufweisen.

6. Fördervorrichtung nach Anspruch 5, **dadurch gekennzeichnet, dass** die Stahlprofilstangen einen Innenhohlraum mit im Wesentlichen rechteckigem Querschnitt haben.

7. Fördervorrichtung nach einem der vorangehenden Ansprüche, **dadurch gekennzeichnet, dass** die Lagerstruktur (20), der Förderkanal (21) und die Schwingungsvorrichtung (32) wenigstens ein Fördermodul (12, 13) definieren.

8. Fördervorrichtung nach Anspruch 7, **dadurch gekennzeichnet, dass** das Fördermodul in wenigstens eine Zone zum Laden der Metallladung, die weiter von dem Behälter (15) weg angeordnet ist, und eine mögliche Zone zum Vorheizen der Metallladung, die näher an dem Behälter (15) angeordnet ist, unterteilt ist.

9. Fördervorrichtung nach Anspruch 7, **dadurch gekennzeichnet, dass** zwei oder mehr Fördermodule (12 und 13) von im Wesentlichen identischer Konzeption nacheinander zusammenwirken.

10. Fördervorrichtung nach Anspruch 9, **dadurch gekennzeichnet, dass** wenigstens ein erstes der Module (12) fähig ist, als ein Ladeelement für die Metallladung zu wirken, während wenigstens ein zweites der Module (13) fähig ist, als ein Vorheizelement für die Metallladung zu wirken.

11. Fördervorrichtung nach einem der Ansprüche 7 bis 10, **dadurch gekennzeichnet, dass** jedes der Fördermodule (12, 13) bis zu 50 m lang ist, zwischen etwa 2,5 m bis 3,5 m, vorteilhafterweise 3 m, breit ist, weniger als 100 Tonnen wiegt und fähig ist, gleichzeitig 30 und mehr Tonnen der Metallladung zu befördern.

12. Fördervorrichtung nach einem der vorangehenden Ansprüche, **dadurch gekennzeichnet, dass** die Lagerstruktur (20) frei schwingen kann, horizontal bleibt, von mehreren vertikalen Zugstreben (27) gehalten wird, die sich zwischen einer Vielzahl von horizontal fixierten Auflageträgern (28) und Querträgern (26) der Lagerstruktur (20) selbst, die von beiden Seiten in Bezug auf den Hauptkörper der Lagerstruktur (20) seitlich vorstehen, ausdehnen.

13. Fördervorrichtung nach einem der Ansprüche 1 bis 12, **dadurch gekennzeichnet, dass** die Lagerstruktur (20) frei schwingen kann, horizontal bleibt, auf elastischen Trägern aufgehängt ist, die geeignet sind, die Lagerstruktur (20) von unten zu halten.

14. Fördervorrichtung nach einem der vorangehenden Ansprüche, **dadurch gekennzeichnet, dass** der Förderkanal (21) mit einer Vielzahl von Metallblechen (21a, 21b, 21c, 21d) hergestellt ist, die in einer derartigen Weise aneinander geschweißt sind, dass es zumindest auf seinen inneren Oberflächen keine Schweißwulste gibt, das heißt, die in Kontakt mit der Metallladung, die befördert werden soll, sind.

15. Fördervorrichtung nach Anspruch 14, **dadurch gekennzeichnet, dass** wenigstens ein Teil der Bleche (21a, 21b, 21c, 21 d) mit Kühleinrichtungen verbunden ist.

16. Fördervorrichtung nach einem der vorangehenden Ansprüche, **dadurch gekennzeichnet, dass** sie auch eine Steuervorrichtung (40) aufweist, die fähig ist, die Verschiebungen oder Schwingungen der Lagerstruktur (20) in Bezug auf jeden fixierten Teil zu erfassen, um die Schwingungsvorrichtung (32) zu stoppen, wenn die Schwingungen der Lagerstruktur (20) einen vordefinierten Wert erreichen.

## Revendications

1. Appareil de transport pour transporter une charge métallique vers un conteneur (15) d'une installation de fusion (11), comprenant au moins une structure de support sensiblement oblongue (20), sur laquelle un canal de transport (21) est fixé et sur laquelle un dispositif de vibration (32) est monté capable de conférer à ladite structure de support (20) et au canal de transport associé (21) un mouvement de vibration au moins dans un sens longitudinal (X), afin de faire avancer ladite charge métallique par rapport audit canal de transport (21) d'une manière sensiblement constante vers ledit conteneur (15), **caractérisé en ce que** ladite structure de transport (20) comprend une pluralité d'éléments métalliques tubulaires (25) fixés l'un à l'autre de façon à former au moins une partie d'un treillis réticulaire.

2. Appareil de transport selon la revendication 1, dans lequel ladite structure de support (20) consiste en deux flancs latéraux et une pluralité de moyens de connexion disposés entre lesdits flancs latéraux, **caractérisé en ce qu'**au moins lesdits flancs latéraux sont réalisés en utilisant lesdits éléments métalliques tubulaires (25).

3. Appareil de transport selon la revendication 2, **caractérisé en ce que** lesdits moyens de connexion sont réalisés en utilisant lesdits éléments métalliques tubulaires (25).

4. Appareil de transport selon la revendication 1, **caractérisé en ce que** lesdits éléments métalliques tubulaires (25) sont fixés les uns aux autres par soudage ou par d'autres moyens de fixation, ce qui rend le treillis réticulaire très rigide.

5. Appareil de transport selon l'une quelconque des revendications précédentes, **caractérisé en ce que** lesdits éléments métalliques tubulaires comprennent des barres à section d'acier.

6. Appareil de transport selon la revendication 5, **caractérisé en ce que** lesdites barres à section d'acier ont une cavité interne à section transversale sensiblement rectangulaire.

7. Appareil de transport selon l'une quelconque des revendications précédentes, **caractérisé en ce que** ladite structure de transport (20), ledit canal de transport (21) et ledit dispositif de vibration (32) forment au moins un module de transport (12, 13).

8. Appareil de transport selon la revendication 7, **caractérisé en ce qu'**un module de transport est divisé en au moins une zone pour charger la charge métallique, disposée à distance dudit conteneur (15), et une zone éventuelle pour préchauffer ladite charge métallique, disposée plus près dudit conteneur (15).

9. Appareil de transport selon la revendication 7, **caractérisé en ce que** deux ou plus modules de transport (12 et 13), sensiblement identiques les uns aux autres dans leur conception, coopèrent en séquence.

10. Appareil de transport selon la revendication 9, **caractérisé en ce qu'**au moins un premier desdits modules (12) est capable de fonctionner comme élément de chargement pour ladite charge métallique, tandis qu'au moins un deuxième desdits modules (13) est capable de fonctionner comme élément de préchauffage pour ladite charge métallique.

11. Appareil de transport selon l'une quelconque des revendications 7 à 10, **caractérisé en ce que** chacun desdits modules de transport (12, 13) a jusqu'à 50 m de longueur, d'environ 2,5 à 3,5 m de largeur, avantageusement 3 m, pèse moins de 100 tonnes et est capable de transporter simultanément 30 tonnes et davantage de ladite charge métallique.

12. Appareil de transport selon l'une quelconque des revendications précédentes, **caractérisé en ce que** ladite structure de transport (20) est libre d'osciller, en restant horizontale, supportée par une pluralité de tiges d'attache verticales (27), s'étirant entre une pluralité de poudres de support fixes horizontales (28) et de poutres transversales (26) de la structure de support (20) elle-même, lesquelles font saillie latéralement depuis les deux côtés par rapport au corps principal de la structure de support (20).

13. Appareil de transport selon l'une quelconque des revendications 1 à 12, **caractérisée en ce que** ladite structure de support (20) est libre d'osciller, en restant horizontale, suspendue sur des lames élastiques aptes à supporter ladite structure de support (20) par le dessous.

14. Appareil de transport selon l'une quelconque des revendications précédentes, **caractérisé en ce que** ledit canal de transport (21) est réalisé avec une pluralité de feuilles métalliques (21a, 21b, 21c, 21d) soudées ensemble de telle manière qu'il n'y a aucun cordon de soudure au moins sur ses surfaces internes, à savoir, celles en contact avec ladite charge métallique à transporter.

15. Appareil de transport selon la revendication 14, **caractérisé en ce qu'**au moins une partie desdites feuilles (21 a, 21 b, 21 c, 21 d) sont associées à des moyens de refroidissement.

16. Appareil de transport selon l'une quelconque des revendications précédentes, **caractérisé en ce qu'**il comprend aussi un dispositif de commande (40) capable de détecter les déplacements ou oscillations de ladite structure de support (20) par rapport à n'importe quelle pièce fixe, afin d'arrêter ledit dispositif de vibration (32) lorsque les oscillations de ladite structure de support (20) atteignent une valeur prédéfinie.
